Europäisches Patentamt

European Patent Office

Office européen des brevets

(11) Veröffentlichungsnummer: **0 002 240**

A1

## (12) EUROPÄISCHE PATENTANMELDUNG

(21) Anmeldenummer: 78101453.5

(22) Anmeldetag: 25.11.78

(51) Int. Cl.²: **B 32 B 27/08**
**B 29 D 9/00**

(30) Priorität: 02.12.77 DE 2753697

(43) Veröffentlichungstag der Anmeldung:
13.06.79 Patentblatt 79/12

(84) Benannte Vertragsstaaten:
CH DE FR GB

(71) Anmelder: BASF Aktiengesellschaft
Carl-Bosch-Strasse 38
D-6700 Ludwigshafen(DE)

(72) Erfinder: Welz, Martin
Kaiserslauterer Strasse 231
D-6702 Bad Duerkheim 3(DE)

(72) Erfinder: Hofmann, Alfred, Dr.
Deichweg 22
D-6712 Bobenheim-Roxheim 2(DE)

(72) Erfinder: Seiler, Erhard, Dr.
Erpolzheimer Strasse 1
D-6700 Ludwigshafen(DE)

(54) Verformbarer Verbundwerkstoff aus verstärktem Polyolefin, einem Haftvermittler und Weich-PVC, und Verfahren zu seiner Herstellung.

(57) Die Erfindung betrifft ein Verfahren zur Herstellung von dreischichtigen Verbundwerkstoffen aus einer äußeren Schicht aus Polyolefin, einer inneren Schicht aus einem Äthylencopolymerisat und einer äußeren Schicht aus einem gegebenenfalls geschäumten Polyvinylchlorid. Bei diesem Verbundstoff soll die mittlere Schicht aus einem Äthylencopolymerisat mit einem Vinylester einer $C_2$- bis $C_4$-Alkancarbonsäure und/oder mit einem Alkylester einer $C_2$- bis $C_4$-Alkencarbonsäure und gegebenenfalls mit einer äthylenisch ungesättigten $C_3$- bis $C_4$-Carbonsäure bestehen, wobei das Copolymerisat einen Zusatz von geringen Mengen eines organischen Peroxids enthält. Das Copolymerisat ist bevorzugt ein Äthylen-Alkencarbonsäurealkylester-Alkencarbonsäure-Terpolymerisat, die äußere Schicht bevorzugt Polypropylen.

EP 0 002 240 A1

Croydon Printing Company Ltd.

BASF Aktiengesellschaft        BEZEICHNUNG GEÄNDERT        O.Z. 0050/032918
                                     siehe Titelseite

**Verformbarer Verbundwerkstoff aus verstärktem
Polyolefin, einem Haftvermittler und Weich-PVC**

Die Erfindung betrifft ein Verfahren zur Herstellung von dreischichtigen Verbundwerkstoffen. Diese Werkstoffe sind aufgebaut aus (1) einer ersten äußeren Schicht aus Olefinpolymerisat, das 10 bis 60 Gewichtsprozent eines festen inerten Füllstoffs enthält, (2) einer zweiten inneren Schicht aus einem Äthylencopolymerisat und (3) einer dritten äußeren Schicht aus einem gegebenenfalls geschäumten Polyvinylchlorid, das 15 bis 40 Gewichtsprozent eines Weichmachers enthält, wobei die Schichten (1) und (2) gegebenenfalls koextrudiert werden und mit der festen Schicht (3) zusammengeführt werden und wobei anschließend die äußeren Schichten (1) und (3) bei erhöhter Temperatur sowie erhöhtem Druck durch die innere Schicht (2) verklebt werden.

Bei derartigen dreischichtigen Verbundwerkstoffen handelt es sich um zusammengesetzte Materialien, die so fest miteinander verbunden sind, daß man die Eigenschaften jeder Komponente für die Vorteile der Gesamtkonstruktion nutzt. Dabei ist ein guter Verbund zwischen den äußeren Deckschichten (1) und (3) erforderlich.

Fre/Fe

Es ist bekannt, eine Schicht aus verstärkten Olefinpolymerisaten (1) mit einer Schicht aus Weich-PVC (3) zu verbinden, wobei als Haftvermittler Bindemittel verwendet werden, die aus wärmehärtenden Kondensationsharzen auf z.B. Basis von Polyurethanen bestehen können.

Nach bekannten Verfahren werden jedoch Verbundwerkstoffe erhalten, die keine ausreichende Wärmeständigkeit aufweisen. Auch die Kältefestigkeit der bekannten Verbundwerkstoffe aus verstärktem Polyolefin (1) und Polyvinylchlorid (2) läßt noch zu wünschen übrig. Ein weiterer Nachteil bekannter Verfahren ist die umständliche Herstellung verformter Gegenstände aus obigem Verbundwerkstoff. Es wird nämlich stets das Kaschieren mit der PVC-Schicht in einem separaten Arbeitsgang nach dem Formen bzw. Stanzen der tragenden Schicht aus verstärktem Olefinpolymerisat vorgenommen. Dies erfordert den Auftrag eines Klebers auf die Olefinpolymerisatschicht (1), das Aufpressen der Weich-PVC-Schicht (3) in einer Form bzw. mit Vakuum und das Aushärten des Klebers, eventuell beschleunigt durch Erwärmen.

Der Erfindung liegt daher die Aufgabe zugrunde, ein Verfahren zur Herstellung von Verbundwerkstoffen aus verstärktem Olefinpolymerisat (1) und Polyvinylchlorid (3) aufzufinden, bei dem das bisher übliche arbeitsintensive Kaschierverfahren vereinfacht ist. Eine weitere Aufgabe der vorliegenden Erfindung ist das Auffinden eines Verbundstoffs aus verstärktem Olefinpolymerisat (1) und Weich-PVC (3), der eine hohe Wärmebeständigkeit und Kältefestigkeit aufweist, ohne daß die Verarbeitbarkeit, wie beispielsweise die Formung in der Wärme, beeinträchtigt wird.

Diese Aufgabe wird erfindungsgemäß dadurch gelöst, daß das Äthylencopolymerisat der Schicht (2) 45 bis 90 Gewichtsteile Äthylen, 10 bis 55 Gewichtsteile eines Vinylesters

und $C_2$- bis $C_4$-Alkancarbonsäure und/oder eines $C_1$- bis $C_8$-Alkylesters einer $C_3$- bis $C_4$-Alkencarbonsäure und gegebenenfalls 0,5 bis 20 Gewichtsteile einer äthylenisch ungesättigten $C_3$- bis $C_4$-Carbonsäure einpolymerisiert enthält, wobei die Summe der Gewichtsteile jeweils 100 beträgt und wobei das Copolymerisat eingesetzt wird mit einem Zusatz von 0,5 bis 7,0 Gewichtsprozent, bezogen auf das Gewicht des Copolymerisats, eines organischen Peroxids, dessen Halbwertstemperatur, gemessen in Benzol, 150 bis 250°C beträgt.

Nach bevorzugtem Verfahren ist das Copolymerisat der Schicht (2) ein binäres Äthylen-Acrylsäuremethylester-Copolymerisat, das 45 bis 75 Gewichtsteile Äthylen und 25 bis 55 Gewichtsteile Acrylsäuremethylester einpolymerisiert enthält.

Bevorzugt ist auch ein Verfahren, bei dem das Copolymerisat der Schicht (2) ein Terpolymerisat aus 50 bis 90 Gewichtsteilen Äthylen, 0,5 bis 20 Gewichtsteilen eines $C_1$- bis $C_8$-Alkylesters einer $C_3$- bis $C_4$-Alkencarbonsäure und 0,5 bis 20 Gewichtsteile einer äthylenisch ungesättigten $C_3$- bis $C_4$-Carbonsäure einpolymerisiert enthält, wobei die Summe der Gewichtsteile jeweils 100 ist.

Die gestellte Aufgabe wurde ferner durch dreischichtige Verbundwerkstoffe der eingangs angegebenen Art gelöst, wobei die äußere Schicht (1) 0,5 bis 8,0 mm, die innere Schicht (2) 0,01 bis 0,2 mm und die äußere Schicht (3) 0,2 bis 5 mm dick ist.

Unter Olefinpolymerisaten werden die einschlägig bekannten Homo- und Copolymerisate des Äthylens und des Propylens mit copolymerisierbaren olefinisch ungesättigten Verbindungen verstanden. Geeignete Olefinpolymerisate sind z.B. Polyäthylen und Polypropylen mit einer Dichte von 0,890 bis 0,965 g/cm³ (nach DIN 53 479) und einem Schmelzindex von 0,1 bis 20 g/10 min (nach ASTM D 1238-65T bei einer Temperatur von 190°C und einem Auflagegewicht von 2,16 kg), sowie Mischungen dieser Olefinpolymerisate untereinander. Diese Olefinpolymerisate können zur Erhöhung der Schlagzähigkeit, gegebenenfalls noch mit 1 bis 20 Gewichtsteilen an üblichen Kautschuken wie Äthylen-Propylen-Copolymerisaten, EPDM-Kautschuken oder Blockcopolymerisaten aus Styrol und Dien versehen sein. Diese Polymerisate sind aus der Polymerchemie wohlbekannt, so daß an dieser Stelle nicht näher darauf eingegangen werden braucht. Als besonders geeignetes Olefinpolymerisat wird das isotaktische Polylpropylen genannt.

Die Olefinpolymerisate sind mit 10 bis 60, bevorzugt 20 bis 50 Gewichtsprozent, bezogen auf das Gewicht des gefüllten Olefinpolymerisats, eines üblichen festen und inerten Füllstoffs gefüllt. Für die Verwendung der Olefinpolymerisatschicht geeignete Füllstoffe sind beispielsweise Glasfasern, Glaskugeln, Talkum, Kreide, Glimmer sowie feinteiliges Holz. Als Holzteilchen kommen alle marktgängigen Typen in einem Teilchenbereich von 10 bis 5 000/um Länge und 10 bis 2 000/um Dicke in Betracht. Die Holzmehle können sowohl in Pulverform als auch kompaktiert eingesetzt sein. Zusätzlich zu den obigen Füllstoffen können die Olefinpolymerisatmassen noch einschlägig bekannte Flammschutzmittel, Mittel zur Verbesserung der Schlagfestigkeit wie Polyäthylen niederer Dichte, Stabilisatoren oder Abfallstoffe (Regenerate) enthalten.

Unter Polyvinylchlorid wird das aus der Polymerchemie bekannte Polymerisationsprodukt des Vinylchlorids verstanden, das einen theoretischen Chlorgehalt von 56 bis 57 Gew.% und einen Erweichungspunkt von 75 bis 80°C aufweist. Der K-Wert des Polyvinylchlorid liegt vorzugsweise bei 70 bis 90 (gemessen nach DIN 53 726). Ein geschäumtes Poly- vinylchlorid ist ein künstlich hergestellter leichter Schaumkunststoff mit zelliger Struktur. Für die erfindungsgemäßen Verbundstoffe sind PVC-Weichsäume mit geschlossenzelligen Schäumen und mit Dichten von 0,6 bis 1,3 g/cm$^3$ geeignet. Das als Schicht (3) verwendete Polyvinylchlorid soll ein sog. Weich-PVC sein. Es enthält dementsprechend einen für PVC gebräuchlichen Weichmacher in Mengen von 15 bis 40, bevorzugt 20 bis 35 Gewichtsprozent, bezogen auf das Gewicht des Weich-PVC. Geeignete Weichmacher sind beispielsweise Trikresylphosphat, Phthalsäureester oder Ester aliphatischer Dicarbonsäuren. Das Weich-PVC kann außerdem noch die einschlägig üblichen Stabilisatoren und Pigmente enthalten.

Bei dem anmeldungsgemäßen Verfahren werden die Schicht (1) aus verstärktem Olefinpolymerisat und die Schicht (2) aus dem Äthylencopolymerisat als Schmelzen zusammen in einem Arbeitsgang auf die feste Schicht (3) aus Polyvinylchlorid koextrudiert. Das Verfahren der Düsenkoextrusion auf eine feste Unterlage ist an sich bekannt und beispielsweise von G. Kautz in "VDI Zeitschrift" 115 (1973) (15) 1184 bis 1189 und in "Kunststoffe" 64 (1974) (7) 330 bis 334 beschrieben. Unter erhöhter Temperatur und erhöhtem Druck wird anmeldungsgemäß eine Temperatur von 100 bis 180$^o$C und ein Druck von 1 bis 70 bar verstanden.

Das als Haftvermittler wirkende Äthylencopolymerisat der Schicht (2) enthält 45 bis 90, bevorzugt 50 bis 70 Gewichtsteile, bezogen auf das Copolymerisat, einpolymerisiertes Äthylen und hat einen Schmelzindex von 0,1 bis 150 g/10 min (nach ASTM D 1238-65T bei einer Temperatur von 190$^o$C und einem Auflagegewicht von 2,16 kg) und eine Dichte von 0,918 bis 0,975 g/cm$^3$ (nach DIN 53 479). Die anderen Bestandteile des Copolymerisats sind 10 bis 55, bevorzugt 25 bis 55 Gewichtsteile eines Vinylesters einer

$C_2$- bis $C_4$-Alkancarbonsäure und/oder eines $C_1$- bis $C_8$-Alkylesters einer $C_3$- bis $C_4$-Alkencarbonsäure und gegebenenfalls 0,5 bis 20 Gewichtsteile einer äthylenisch ungesättigten $C_3$- bis $C_4$-Carbonsäure, wobei die Summe aller Gewichtsteile jeweils 100 beträgt. Als geeignete Vinylester seien das Vinylacetat und das Vinylpropionat, als geeignete Alkylester die Methyl-, Äthyl-, Propyl- und Butylester der Acrylsäure und als geeignete äthylenisch ungesättigte $C_3$- bis $C_4$-Carbonsäure die Acrylsäure und die Methacrylsäure genannt. Die oben erwähnten Copolymerisate sind an sich bekannt und sind beschrieben beispielsweise in der US-PS 3 215 678.

Die Copolymerisate enthalten einen Zusatz von 0,05 bis 7,0 Gewichtsprozent, bezogen auf das Gewicht des Copolymerisats, eines organischen Peroxids, dessen Halbwertstemperatur des Zerfalls, gemessen in Benzol 150 bis 250, bevorzugt 150 bis 200°C beträgt. Die Halbwertstemperatur ist definiert als diejenige Temperatur, bei der das organische Peroxid, gelöst in Benzol, in einer Minute zur Hälfte zerfällt (vgl. US-Patentschrift 3 835 107). Als organische Peroxide werden bevorzugt verwendet die Verbindungen: Di-$\alpha$-cumylperoxid, Halbwertstemperatur 179°C; Di-tert.-butylperoxid, Halbwertstemperatur 193°C und tert.-Butylperbenzoat, Halbwertstemperatur 163°C.

Nach bevorzugter Verfahrensweise ist das Copolymerisat der Schicht (2) ein binäres Copolymerisat aus 45 bis 75 Gewichtsteilen Äthylen und 25 bis 55 Gewichtsteilen Acrylsäuremethylester. Dieses Copolymerisat ist an sich bekannt, z.B. aus: "Polymer Engineering and Science" 6 (1966) (1) 5 - 14.

Nach weiter bevorzugtem Verfahren ist das Copolymerisat der Schicht (2) ein Terpolymerisat aus 50 bis 90, bevorzugt 50 bis 70 Gewichtsteilen Äthylen, 0,5 bis 20 Gewichtsteilen eines $C_1$- bis $C_8$-Alkylesters der oben angegebenen Art und 0,5 bis 20 Gewichtsteilen einer äthylenisch ungesättigten Carbonsäure, bevorzugt der Acrylsäure, wobei die Summe der Gewichtsteile jeweils 100 ist. Diese Terpolymerisate und deren Mischungen mit Peroxiden sowie die Verwendung dieser Terpolymerisatmischungen mit Peroxiden als Haftvermittler ist bereits bekannt und in der deutschen Patentschrift 17 69 422 beschrieben.

Erfindungsgemäß soll die äußere Schicht (1) des dreischichtigen Verbundwerkstoffes 0,5 bis 8,0 mm, die innere Schicht (2) 0,01 bis 0,2 mm und die äußere Schicht (3) 0,2 bis 5 mm dick sein.

Die mit der Erfindung erzielten Vorteile bestehen insbesondere darin, daß durch die Zugabe von Peroxid der Haftvermittler so vernetzt wird, daß die Wärmebeständigkeit ausreichend angehoben werden kann, ohne daß die Verarbeitbarkeit des Verbundstoffs merklich beeinträchtigt wird. Das Vernetzen des Haftvermittlers wird erfindungsgemäß beim Vorwärmen des Materials zum Warmformen, also ohne zusätzlichen Aufwand, durchgeführt.

Beispiel 1

Für eine PKW-Türinnenverkleidung wird eine 3,5 mm dicke Platte aus isotaktischem Polypropylen der Dichte 0,907 g/cm und des Schmelzindices 5 g/10 min, das durch 40 gew.%ige Holzmehlfüllung einen E-Modul von 3 800 N/mm$^3$ aufweist, extrudiert. Auf die noch 190°C heiße Platte wird eine 100 µm dicke Haftvermittlerschicht als Schmelze über einen separaten Extruder aufgegeben. Der Haftvermittler besteht aus einem Copolymerisat aus 62,0 Gew.% Äthylen und 38,0 Gew.% Methylacrylat und hat eine Dichte von 0,96 g/cm$^3$ und einen Schmelzindex von 10 g/10 min und enthält einen Zusatz von 3,0 Gew.% Dicumylperoxid. Die Deckfolie besteht aus einem geschäumten Weich-PVC von 2,0 mm Dicke mit einer genarbten Oberfläche; sie wird bei einer Temperatur von 80°C im Glättwerk auf die extrudierten Schichten unter einem Druck von 10 bar aufgedrückt und so mit ihnen verschweißt, und anschließend wird der Verbund durch Abkühlen auf 50°C fixiert. Aus dem erhaltenen Halbzeug werden Zuschnitte ausgestanzt, in einem IR-Strahlungsofen 8 min auf 170°C aufgeheizt und in einer kalten Metallform bei 15 bar zum Verkleidungsteil verpreßt. Zwischen Träger aus holzmehlgefülltem Polypropylen und der Weich-PVC-Folie wurde eine Haftfestigkeit von 29 N/cm im Schältest bestimmt.

Beispiel 2

Für eine PKW-Hutablage wird eine 4 mm dicke Platte aus mit 45 Gew.% Holzmehl gefülltem isotaktischen Polypropylen und eine 70 µm dicke Haftvermittlerschicht aus einem Copolymerisat mit 66,0 Gew.% Äthylen und 34,0 Gew.% Vinylacetat (Dichte 0,957 g/cm$^3$; Schmelzindex 18 g/10 min) hergestellt. Als Peroxid wurde tertiär-Butylperbenzoat mit einem Anteil von 1 Gew.%, bezogen auf das Copolymerisat, eingesetzt. Die Weich-PVC-Folie ist 1,2 mm dick und kompakt, sie wird durch das Glättwerk aufkaschiert.

Die Zuschnitte aus diesem Halbzeug werden in 10 min auf ca. 180°C aufgeheizt und in einer kalten Metallform unter einem Druck von 60 bar gepreßt und innerhalb von 30 sec abgekühlt. Die Ledernarbung erhält die PVC-Deckfolie erst bei diesem Preßvorgang.

Beispiel 3

Zur Fertigung von Seitenverkleidungen für PKW's wird ein mit 40 Gew.% Talkum gefülltes Polyäthylen der Dichte 0,96 g/cm$^3$ und dem Schmelzindex 4,5 g/10 min in eine Schichtdicke von 2,5 mm zusammen mit einen Haftvermittler (Schichtdicke 100 /um) aus einem Copolymerisat aus 62,0 Gew.% Äthylen und 38,0 Gew.% Methylacrylat (Dichte 0,96 g/cm$^3$, Schmelzindex 10 g /10 min) mit einem Zusatz von 2 % tertiär-Butylperbenzoat extrudiert. Auf das noch 170$^o$C heiße Halbzeug wird beim Durchlaufen des Glättwerkes eine 2,5 mm dicke geschäumte Weich-PVC-Folie aufgedrückt. Zur Weiterverarbeitung werden Zuschnitte daraus innerhalb von 5 min auf 160$^o$C angewärmt und anschließend auf einer einteiligen Metallform mit Vakuum geformt und abgekühlt.

Beispiel 4

Für eine LKW-Getriebeabdeckung wird eine 2,5 mm tragende Schicht durch Tränken von zwei Endlosglasfasermatten von je 450 g/cm$^2$ mit einer aus einer Breitschlitzdüse extrudierten Polypropylenschmelze (Dichte 0,907 g/cm$^3$, Schmelzindex 5 g/10 min) hergestellt. Zu dieser Schicht wird über einen separaten Extruder eine Haftvermittlerschicht von 100 /um Dicke extrudiert und vor dem Durchlaufen des ersten von 5 Glättwalzenpaaren eine kompakte Weich-PVC-Folie von 1,5 mm Dicke zugegeben. Zuschnitte dieses Schichtverbundes werden in 7 min auf ca. 190$^o$C angewärmt und in eine Metallform gepreßt und abgekühlt.

Patentansprüche

1. Verfahren zur Herstellung von dreischichtigen Verbundwerkstoffen, aufgebaut aus (1) einer ersten äußeren
   Schicht aus einem Olefinpolymerisat, das 10 bis 60 Gewichtsprozent eines festen inerten Füllstoffs enthält,
   (2) einer zweiten inneren Schicht aus einem Äthylencopolymerisat und (3) einer dritten äußeren Schicht aus
   einem gegebenenfalls geschäumten Polyvinylchlorid, das
   15 bis 40 Gewichtsprozent eines Weichmachers enthält,
   wobei die Schichten (1) und (2) gegebenenfalls koextrudiert werden, und mit der festen Schicht (3) zusammengeführt werden und wobei anschließend die äußeren
   Schichten (1) und (3) bei erhöhter Temperatur sowie gegebenenfalls bei erhöhtem Druck durch die innere
   Schicht (2) verklebt werden, dadurch gekennzeichnet,
   daß das Äthylencopolymerisat der Schicht (2) 45 bis
   90 Gewichtsteile Äthylen, 10 bis 55 Gewichtsteile eines
   Vinylesters einer $C_2$- bis $C_4$-Alkancarbonsäure und/oder
   eines $C_1$- bis $C_8$-Alkylesters einer $C_3$- bis $C_4$-Alken-
   carbonsäure und gegebenenfalls 0,5 bis 20 Gewichtsteile
   einer äthylenisch ungesättigten $C_3$- bis $C_4$-Carbonsäure
   einpolymerisiert enthält, wobei die Summe der Gewichtsteile jeweils 100 beträgt, und wobei das Copolymerisat
   eingesetzt wird mit einem Zusatz von 0,05 bis 7,0 Gewichtsprozent, bezogen auf das Gewicht des Copolymerisats, eines organischen Peroxids, dessen Halbwertstemperatur, gemessen in Benzol, 150 bis 250°C beträgt.

2. Verfahren nach Anspruch 1, dadurch gekennzeichnet, daß das Copolymerisat der Schicht (2) ein binäres Äthylen-Acrylsäuremethylester-Copolymerisat ist, das 45 bis 75 Gewichtsteile Äthylen und 25 bis 55 Gewichtsteile Acrylsäuremethylester einpolymerisiert enthält.

3. Verfahren nach Anspruch 1, dadurch gekennzeichnet, daß das Copolymerisat der Schicht (2) ein ternäres Copolymerisat ist, das 50 bis 90 Gewichtsteile Äthylen, 0,5 bis 20 Gewichtsteile eines $C_1$- bis $C_8$-Alkylesters einer $C_3$- bis $C_4$-Alkencarbonsäure und 0,5 bis 20 Gewichtsteile einer äthylenisch ungesättigten $C_3$- bis $C_4$-Carbonsäure einpolymerisiert enthält, wobei die Summe der Gewichtsteile jeweils 100 ist.

4. Verfahren nach Anspruch 1, dadurch gekennzeichnet, daß die Schicht (1) aus isotaktischem Polypropylen besteht, das 30 bis 50 Gewichtsprozent Holzmehl enthält.

5. Dreischichtige Verbundwerkstoffe, die aufgebaut sind aus (1) einer ersten äußeren Schicht aus einem Olefinpolymerisat, das 10 bis 60 Gewichtsprozent eines festen inerten Füllstoffs enthält, (2) einer zweiten inneren Schicht aus einem vernetzten Äthylencopolymerisat und (3) einer dritten äußeren Schicht aus einem gegebenenfalls geschäumten Polyvinylchlorid, das 15 bis 40 Gewichtsprozent eines Weichmachers enthält und wobei die Verbundstoffe nach Ansprüchen 1 bis 4 hergestellt wurden, dadurch gekennzeichnet, daß die äußere Schicht (1) 0,5 bis 8,0 mm, die innere Schicht (2) 0,01 bis 0,2 mm und die äußere Schicht (3) 0,2 bis 5 mm dick ist.

Europäisches
Patentamt

**EUROPÄISCHER RECHERCHENBERICHT**

Nummer der Anmeldung

EP 78 10 1453

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 364 041 (SUMITOMO CHEM.) <br><br> * Ansprüche 1-3; Seite 2, Absatz 3 - Seite 5, Absatz 1; Seite 8, Absatz 4 - Seite 11, Absatz 1; Beispiel 1 * | 1,5 |
| D | DE - A - 1 769 422 (BASF) <br><br> * Ansprüche; Seite 2, Absatz 2 - Seite 5, Absatz 3; Beispiele 1, 2 * | 1-3 |
| A | DE - A - 1 934 232 (TORAY IND.) <br><br> * Ansprüche 1,13-15; Seite 7, Absatz 6 - Seite 13, Absatz 2; Beispiele 9-14 * | 1,5 |
| A | FR - A - 1 220 272 (LONZA) <br><br> * Zusammenfassung, Punkten c,d,e, 1; Seite 1, rechte Spalte - Seite 2; Seite 7 * | 1,5 |
| A | DE - A - 2 022 340 (MITSUI) <br><br> * Ansprüche 1-5; Beispiele 2,8 * | 1-3 |

**KLASSIFIKATION DER ANMELDUNG (Int.Cl.²)**

B 32 B 27/08
B 29 D 9/00

**RECHERCHIERTE SACHGEBIETE (Int. Cl.²)**

B 32 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-03-1979 | BLASBAND |

EPA form 1503.1   06.78